# FASCICULE DE BREVET EUROPEEN

(11) **EP 3 167 180 B1**
(45) Date de publication et mention de la délivrance du brevet: **11.11.2020**
(21) Numéro de dépôt: 15726624.8
(22) Date de dépôt: 05.06.2015
(51) Int. Cl.: F02M 47/02, F02M 63/00

(54) **INJECTEUR DE CARBURANT**
KRAFTSTOFFEINSPRITZER
FUEL INJECTOR

(30) Priorité: 07.07.2014 FR 1456541
(43) Date de publication de la demande: 17.05.2017
(73) Titulaire: Delphi Technologies IP Limited, St. Michael (BB)
(72) Inventeur: THIBAULT, Thierry, F-37530 Saint-Ouen-les-Vignes (FR)
(74) Mandataire: Delphi France SAS
(86) Numéro de dépôt international: PCT/EP2015/062571
(87) Numéro de publication internationale: WO 2016/005119

(56) Documents cités:
- EP-A1- 2 067 980
- DE-A1-102007 001 365
- DE-A1-102010 017 686
- DE-A1-102011 089 198
- JP-A- 2010 163 914
- US-A- 6 027 037

## Description

### DOMAINE TECHNIQUE

L'invention est relative à un injecteur de carburant et plus particulièrement à une vanne de contrôle de l'injecteur.

### ARRIERE-PLAN TECHNOLOGIQUE DE L'INVENTION

Un injecteur de carburant connu comprend un corps cylindrique dans lequel une aiguille est agencée axialement coulissante entre une position ouverte permettant l'injection de carburant dans une chambre de combustion et, une position fermée interdisant l'injection. Les déplacements de l'aiguille sont hydrauliquement pilotés par une vanne de contrôle comprenant une bobine fixe coopérant avec une armature magnétique mobile entre une position ouverte atteinte lorsque la bobine est électriquement alimentée, position également appelée position « haute » ou proche de la bobine, et une position fermée, ou « basse » ou « éloignée » atteinte lorsque la bobine n'est plus alimentée.

L'armature a la forme globale d'un champignon stylisé dont le chapeau serait formé par un plateau circulaire magnétique et le pied par une tige formant piston de vanne. Le plateau est agencé à proximité de la bobine et le piston s'étend depuis le centre du plateau en s'éloignant de la bobine.

Lorsque la bobine n'est pas alimentée, l'armature est repoussée en position fermée par un ressort de compression agencée entre le plateau et la bobine. Du carburant à haute pression est alors prisonnier d'une chambre de contrôle et il exerce sur l'aiguille une force de fermeture la maintenant en position fermée comme décrit dans le document DE 10 2010 017686 A1.

Lorsque la bobine est alimentée, elle attire le plateau magnétique vers la position haute et ouvre un canal d'évacuation par lequel le carburant prisonnier de la chambre de contrôle peut sortir, la pression dans ladite chambre baisse permettant alors à l'aiguille de se déplacer en position ouverte.

Le carburant sorti de la chambre de contrôle occupe tout le volume disponible autour de l'armature et se trouve notamment dans l'espace entre la bobine et le plateau magnétique où il peut perturber les déplacements de l'armature.

### RESUME DE L'INVENTION

La présente invention résout en parti ces problèmes en proposant une vanne de contrôle prévue pour piloter les déplacements de l'aiguille d'un injecteur de carburant. La vanne comprend une bobine fixée au corps de l'injecteur coopérant avec une armature mobile entre une position ouverte, proche de la bobine lorsque celle-ci est électriquement alimentée et, une position fermée, éloignée de la bobine lorsque celle-ci n'est pas alimentée. L'armature comprend un plateau magnétique du centre duquel une tige de vanne s'étend perpendiculairement au plateau en direction opposée à la bobine jusqu'à une extrémité distante. Ladite tige de vanne coulisse dans un alésage du corps d'injecteur, les déplacements de l'armature et du piston ouvrant ou fermant des canaux dans lesquels circule du carburant sous pression. De plus, l'armature est avantageusement pourvue d'un dispositif d'évacuation rapide du carburant prisonnier entre la bobine et le plateau.

Le dispositif d'évacuation comprend un canal d'évacuation s'ouvrant dans la première face du plateau, agencée en vis-à-vis de la bobine, le canal d'évacuation s'étendant jusqu'à une bouche de sortie par où le carburant peut repartir vers un circuit basse pression.

Plus particulièrement, le canal d'évacuation s'ouvre au centre de la première face du plateau et s'étend axialement dans le piston de vanne.

La longueur du canal d'évacuation s'étend à peine au-delà de l'épaisseur du plateau et, au moins un canal auxiliaire s'étend radialement dans le piston depuis ledit canal d'évacuation jusqu'à la bouche de sortie située à la périphérie du piston, à proximité de la seconde face du plateau, opposée à la première face.

Le canal d'évacuation s'étend axialement d'une extrémité à l'autre du piston, depuis le centre de la première face du plateau jusqu'à l'extrémité distante du piston.

Le canal axial comprend un tronçon de section réduite formant restriction de sorte que des ondes de pression se propageant dans le carburant soient amorties.

La restriction est agencée en une position intermédiaire du canal d'évacuation, à distance de la première face du plateau et de l'extrémité distante du piston.

La restriction est agencée au voisinage de l'une des extrémités du canal d'évacuation.

L'invention est également relative à un injecteur de carburant comprenant une vanne de contrôle réalisée selon les précédents paragraphes.

### DESCRIPTION DES FIGURES

Un mode de réalisation de l'invention est maintenant décrit par l'intermédiaire des figures suivantes.
La figure 1 est une section axiale d'un injecteur connu de l'art antérieur.
La figure 2 un détail de la vanne de contrôle selon un premier mode de réalisation de l'invention.
La figure 3 un détail de la vanne de contrôle selon un second mode de réalisation de l'invention.
Les figures 4, 5 et 6 sont des alternatives complémentaires au second mode de la figure 3.

### DESCRIPTION DES MODES DE REALISATION PRÉFÉRÉS

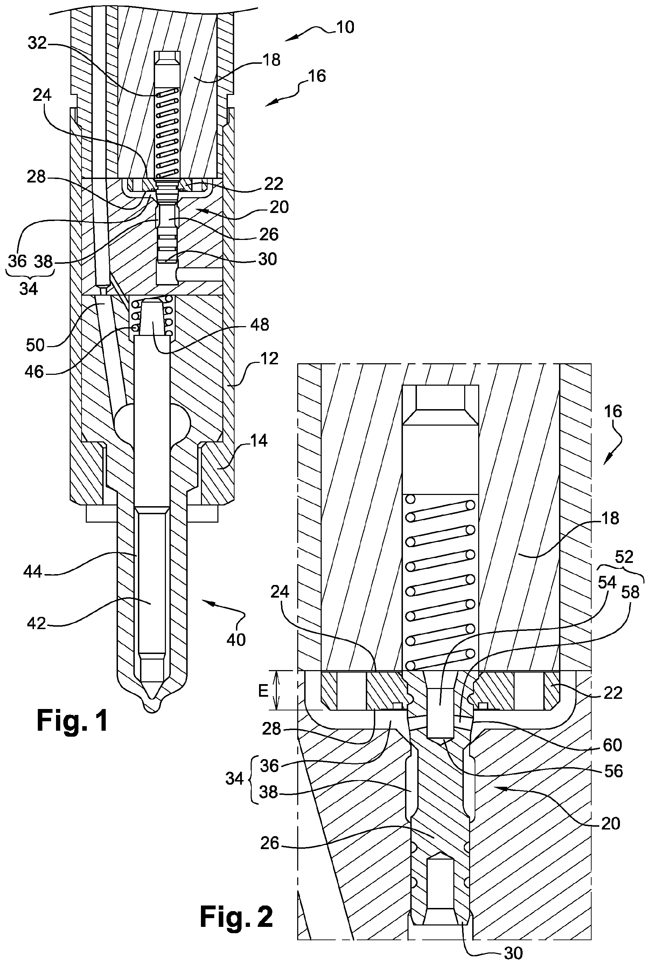

Un injecteur 10, connu de l'art antérieur, est décrit en référence à la figure 1. Il s'étend selon un axe principal et comprend un corps 12 constitué de plusieurs tronçons coaxiaux maintenus solidaires les uns aux autres par un écrou d'injecteur 14. Dans le corps 12 sont agencés une vanne de contrôle 16 comprenant une bobine 18, fixe dans le corps 12, et un ensemble tige-armature 20 mobile comprenant elle-même une armature magnétique 22 en forme de plateau et dont une première face 24 circulaire, ou face haute, est en vis-à-vis de la bobine 18 et, une tige de vanne 26 formant piston de vanne 26 solidaire du plateau 22 et qui s'étend perpendiculairement du centre de la seconde face 28, ou face basse opposée de la première face 24, jusqu'à une extrémité distante 30. Bien que de nombreuses alternatives soient possibles, l'exemple choisi présente un piston 26 serti dans l'armature 22, l'extrémité supérieure de la tige 26 affleurant à la première face 24 de l'armature 22. De plus, un ressort 32 axialement agencé au centre de la bobine 18 et comprimé entre le fond de son logement et l'extrémité supérieure de la tige 26 sollicite en permanence l'ensemble tige-armature 20 vers une position éloignée de la bobine 18.

L'armature 20 est mobile dans un logement 34 comprenant une cavité haute 36 recevant le plateau et, un alésage 38 dans lequel le piston 26 est ajusté coulissant. L'armature 20 se déplace entre une position ouverte, ou haute, et une position fermée, ou basse, position précédemment identifiée éloignée de la bobine.

La partie basse de l'injecteur 10, relativement à l'orientation de la figure, constitue une buse d'injection 40 comprenant une aiguille 42 coulissante dans un alésage 44 entre une position fermée dans laquelle la pointe de l'aiguille coopère avec un siège de buse pour interdire l'injection de carburant et, une position entièrement ouverte dans laquelle la pointe est éloignée du siège permettant l'injection de carburant. L'aiguille 42 est hydrauliquement pilotée en fonction de la pression du carburant dans une chambre de contrôle 46 agencée en haut de la buse 40 et dans laquelle émerge la tête 48 de l'aiguille 42. Ladite chambre de contrôle 46 est d'une part connectée à un canal haute pression 50 par lequel arrive du carburant et, d'autre part à l'alésage 38 du piston de vanne par où s'échappe le carburant lorsque la bobine 18 est alimentée et que l'armature 20 est en position ouverte.

En référence à la figure 2 est maintenant décrit un premier mode de réalisation de l'invention destinée à permettre une évacuation rapide du carburant pouvant se trouver entre la bobine 18 et la première face 24 du plateau 22 voire dans le logement du ressort 32.

Pour ce faire, l'armature 20 de la vanne de contrôle 16 est pourvue d'un canal d'évacuation 52 comprenant un tronçon principal 54 s'étendant axialement dans le piston 26 depuis le centre de la première face 24 du plateau jusqu'à un fond 56, la longueur de ce tronçon principal 54 dépassant à peine l'épaisseur E du plateau 22. Le canal d'évacuation comprend également des canaux auxiliaires 58 s'étendant radialement dans le piston 26, depuis le fond 56 du tronçon principal 54 jusqu'à une bouche de sortie 60 située au pourtour du piston 26. Deux canaux auxiliaires 58 sont représentés sur la figure 2 mais, des alternatives n'ayant qu'un seul canal auxiliaire ou bien au contraire plus de deux sont tout à fait possibles. Tel que visible sus la figure 2, la bouche de sortie 60 est à proximité de la seconde face 28 du plateau et met en communication de fluide l'espace inter bobine-plateau avec le fond de la cavité 36. De plus, pour permettre l'évacuation rapide du carburant, le canal 52 offre une large ouverture dans la première face 24 du plateau.

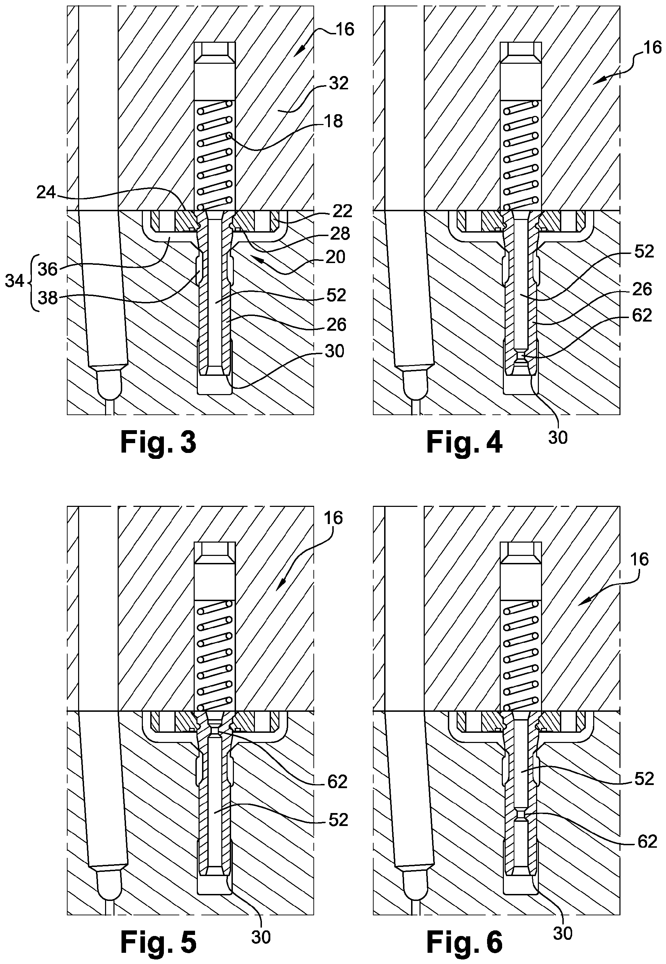

En référence à la figure 3 est maintenant décrit un second mode de réalisation de l'invention. Ici, le canal d'évacuation 52 s'étend axialement au cœur du piston 26 en débouchant aux deux extrémités, dans la première face 24 du plateau et dans l'extrémité distante 30 du piston.

Les figures 4, 5 et 6 présentent trois alternatives au second mode de réalisation de la figure 3, ces alternatives permettant d'amortir une onde de pression se propageant dans le carburant. Pour ce faire le canal d'évacuation 52 comprend une restriction 62 de faible section relativement à la section du canal d'évacuation 52. Cette restriction 62 peut être agencée à proximité de l'extrémité distante 30 du piston, tel que selon la figure 4, ou bien à proximité de la première face 24 du plateau, tel que selon la figure 5, ou bien encore en tout emplacement intermédiaire au centre du piston, tel que selon la figure 6.

Les références suivantes sont utilisés dans la description :
- E: épaisseur du plateau
- 10: injecteur
- 12: corps de l'injecteur
- 14: écrou d'injecteur
- 16: vanne de contrôle
- 18: bobine
- 20: armature
- 22: plateau magnétique
- 24: première face du plateau
- 26: piston de vanne
- 28: seconde face du plateau
- 30: extrémité distante du piston
- 32: ressort
- 34: logement
- 36: cavité
- 38: alésage du piston de vanne
- 40: buse d'injection
- 42: aiguille
- 44: alésage de l'aiguille
- 46: chambre de contrôle
- 48: tête de l'aiguille
- 50: canal haute pression
- 52: canal d'évacuation
- 54: tronçon principal du canal
- 56: fond du premier tronçon
- 58: canaux auxiliaire
- 60: bouche de sortie du canal auxiliaire
- 62: restriction

## Revendications

1. Vanne de contrôle (16) prévue pour piloter les déplacements de l'aiguille (42) d'un injecteur (10) de carburant, la vanne (16) comprenant une bobine (18) apte à être fixée au corps (12) de l'injecteur et coopérant avec une armature (20, 22, 26) mobile entre une position ouverte proche de la bobine (18) lorsque celle-ci est électriquement alimentée et, une position fermée éloignée de la bobine (18) lorsque celle-ci n'est pas électriquement alimentée, l'armature (20, 22, 26) comprenant un plateau magnétique (22) du centre duquel une tige de vanne (26) s'étend perpendiculairement au plateau (22) en direction opposée à la bobine (18) jusqu'à une extrémité distante (30), ladite tige (26) coulissant dans un alésage du corps (12) d'injecteur, les déplacements de l'armature (22) et de la tige (26) ouvrant ou fermant des canaux dans lesquels circule du carburant sous pression, **caractérisé en ce que**
l'armature (20, 22, 26) est pourvue d'un dispositif d'évacuation rapide (52) du carburant prisonnier entre la bobine (18) et le plateau (22),
et **en ce que** le dispositif d'évacuation (52) comprend un canal d'évacuation (52) offrant une large ouverture dans la première face du plateau (24), agencée en vis-à-vis de la bobine (18), le canal d'évacuation (52) s'étendant jusqu'à une bouche de sortie (60), la bouche de sortie 60 étant à proximité d'une seconde face (28) du plateau (22) et met en communication de fluide l'espace inter bobine-plateau avec le fond d'une cavité (36) par où le carburant peut repartir vers un circuit basse pression, le canal d'évacuation (52) s'étendant axialement d'une extrémité à l'autre du piston (26), depuis le centre de la première face (24) du plateau jusqu'à l'extrémité distante (30) du piston et,
en ce le canal d'évacuation (52) axial comprenant un tronçon de section réduite formant restriction (62) de sorte que des ondes de pression se propageant dans le carburant soient amorties, la restriction (62) étant agencée au voisinage de l'une des extrémités du canal d'évacuation (52).

2. Vanne de contrôle (16) selon la revendication 1 dans laquelle le canal d'évacuation (52) s'ouvre au centre de la première face du plateau et s'étend axialement dans le piston (26) de vanne,

3. Injecteur de carburant (10) comprenant une vanne de contrôle (16) réalisée selon l'une quelconque des revendications précédentes.

## Patentansprüche

1. Steuerventil (16), das dazu vorgesehen ist, die Bewegungen der Ventilnadel (42) eines Kraftstoffinjektors (10) zu steuern, wobei das Ventil (16) eine Spule (18) enthält, die am Körper (12) des Injektors befestigt werden kann und mit einem Anker (20, 22, 26) zusammenwirkt, der zwischen einer offenen Position in der Nähe der Spule (18), wenn diese elektrisch gespeist wird, und einer geschlossenen Position entfernt von der Spule (18), wenn diese nicht elektrisch gespeist wird, beweglich ist, wobei der Anker (20, 22, 26) eine Magnetplatte (22) enthält, von deren Mitte aus sich ein Ventilschaft (26) senkrecht zu der Platte (22) in entgegengesetzter Richtung zu der Spule (18) bis zu einem entfernt liegenden Ende (30) erstreckt, wobei der Schaft (26) in einer Bohrung des Injektorkörpers (12) gleitet, wobei die Bewegungen des Ankers (22) und des Schafts (26) Kanäle, in denen Kraftstoff unter Druck fließt, öffnen bzw. schließen,
**dadurch gekennzeichnet, dass**
der Anker (20, 22, 26) mit einer Vorrichtung (52) zum schnellen Ableiten von Kraftstoff versehen ist, die zwischen der Spule (18) und der Platte (22) aufgenommen ist,
und dass die Ableitvorrichtung (52) einen Ableitkanal (52) enthält, der eine breite Öffnung in der ersten Seite der Platte (24) freigibt, die der Spule (18) gegenüberliegend angeordnet ist, wobei sich der Ableitkanal (52) zu einer Auslassmündung (60) erstreckt, wobei die Auslassmündung (60) in der Nähe einer zweiten Seite (28) der Platte (22) befindet und den Zwischenraum zwischen Spule und Platte mit dem Boden einer Vertiefung (36) in Strömungsverbindung setzt, von wo der Kraftstoff zurück zu einem Niederdruckkreislauf strömen kann, wobei sich der Ableitkanal (52) axial von einem Ende des Kolbens (26) zum anderen ausgehend von der Mitte der ersten Seite (24) der Platte bis zum entfernt liegenden Ende (30) des Kolbens erstreckt, und
der axial verlaufende Ableitkanal (52) einen Abschnitt mit reduziertem Querschnitt aufweist, der eine Verengung (62) bildet, so dass im Kraftstoff sich ausbreitende Druckwellen gedämpft werden, wobei die Verengung (62) benachbart zu einem der Enden des Ableitkanals (52) angeordnet ist.

2. Steuerventil (16) nach Anspruch 1,
wobei der Ableitkanal (52) sich zur Mitte der ersten Seite der Platte öffnet und sich axial in dem Ventilkolben (26) erstreckt.

3. Kraftstoffinjektor (10) mit einem Steuerventil (16) nach einem der vorangehenden Ansprüche.

## Claims

1. Control valve (16) intended to control the movements of the needle (42) of a fuel injector (10), the valve (16) comprising a coil (18) capable of being fixed to the body (12) of the injector and cooperating with an armature (20, 22, 26) that can move between an open position close to the coil (18) when said coil is energized and a closed position remote from the coil (18) when said coil is not energized, the armature (20, 22, 26) comprising a magnetic plate (22), from the centre of which a valve stem (26) extends perpendicularly to the plate (22) in an opposite direction to the coil (18) as far as a distal end (30), said stem (26) sliding in a bore in the injector body (12), the movements of the armature (22) and of the stem (26) opening or closing channels in which pressurized fuel circulates, **characterized in that**
the armature (20, 22, 26) is provided with a rapid discharge device (52) for discharging the fuel which is trapped between the coil (18) and the plate (22),
and **in that** the discharge device (52) comprises a discharge channel (52) with a wide opening in the first face of the plate (24), arranged facing the coil (18), the discharge channel (52) extending as far as an outlet (60), the outlet 60 being proximate to a second face (28) of the plate and placing the space between coil and plate in fluidic communication with the base of a cavity (36) through which the fuel can spread towards a low-pressure circuit, the discharge channel (52) extending axially from one end of the piston (26) to the other, from the centre of the first face (24) of the plate as far as the distal end (30) of the piston, and
**in that** the axial discharge channel (52) comprises a section with a smaller cross section forming a restriction (62), such that pressure waves spreading in the fuel are damped, the restriction (62) being arranged in the vicinity of one of the ends of the discharge channel (52).

2. Control valve (16) according to Claim 1, wherein the discharge channel (52) opens in the centre of the first face of the plate and extends axially in the valve piston (26) .

3. Fuel injector (10) comprising a control valve (16) realized according to any one of the preceding claims.
